# EUROPEAN PATENT SPECIFICATION

(11) **EP 3 085 950 B1**
(45) Date of publication and mention of the grant of the patent: **06.06.2018**
(21) Application number: 16164699.7
(22) Date of filing: 11.04.2016
(51) Int. Cl.: F03B 13/06, F03D 9/14, F03D 9/00

(54) **OFFSHORE FLOATING POWER GENERATOR**
SCHWIMMENDER OFFSHORE-STROMGENERATOR
GÉNÉRATEUR DE PUISSANCE FLOTTANTE EN MER

(30) Priority: 24.04.2015 KR 20150058264
(43) Date of publication of application: 26.10.2016
(73) Proprietor: Kepco Engineering & Construction Company, Inc., Gimcheon-si Gyeongsangbuk-do 39660 (KR)
(72) Inventor: PARK, Koo Won, 05510 Seoul (KR); KIM, Jong Kawn, 16817 Gyeonggi-do (KR); CHOI, Soo Young, 16921 Gyeonggi-do (KR)
(74) Representative: J A Kemp

(56) References cited:
- WO-A2-2013/163979
- DE-A1- 4 301 659
- DE-A1-102013 015 082
- GB-A- 2 505 415
- US-A- 4 141 670

## Description

The present invention relates to an offshore floating power generator, and more particularly, to an offshore floating power generator including a sea water reservoir floating on the sea surface and including a high water tank and a low water tank having a water level difference therebetween so as to allow effective power generation by using the water level difference between the high water tank and the low water tank.

Energy sources such as wind power, sunlight, and tidal power have recently been noticed as new renewable energy sources. These energy sources can be used in power generation without fear of depletion. However, use of the energy sources may be limited due to the following characteristics.

Although wind power is stronger on the sea than on land, it is difficult to predict when and how strong wind power occurs. Moreover, seasonal variation of wind power is very large, and the duration thereof is also discontinuous.

Sunlight is provided only during the daytime, and the intensity of sunlight is also greatly affected by the season and weather.

In regard to tidal power, while long-term prediction of the intensity and time of generation of tidal power is possible to some extent among offshore energy sources, variation in the intensity of tidal power according to time is great, and the time that tidal power reaches a peak is changed each day by a delay of 50 minutes each day.

As described above, while wind power, sunlight, and tidal power are fundamentally differentiated from fossil fuel as renewable energy sources, the intensity and time of generation of these energy sources are irregular and the duration thereof is discontinuous. Thus, the intensity and time of power generation using these energy sources are inevitably irregular, and the duration thereof is also discontinuous. Although a method of generating power using the above renewable energies and storing the power in a storage battery for use at a required time is theoretically possible, the size of the storage battery has to be huge and the storage battery is regularly replaced. In other words, there are limitations in generating power for use at a desired time due to excessive costs for installation and maintenance of a storage battery.

Accordingly, a novel power generator for generating power of good quality at a required time by using renewable energy sources is required.

WO-2013/163979, on which the two part form of claim 1 is based, discloses an offshore floating power generator comprising: a sea water reservoir configured to store sea water and float on the sea surface, wherein the sea water reservoir comprises a low water tank having a first water level and a high water tank having a second water level higher than the first water level; an inlet pipe configured to guide the sea water flowing through an inlet portion to the low water tank or the high water tank; a connection pipe configured to connect the low water tank and the high water tank with each other; a water turbine generator provided on the connection pipe; and a water level adjustor configured to discharge the sea water stored in the low water tank to the sea, wherein, when sea water of the high water tank flows into the low water tank through the connection pipe due to a difference between the first water level and the second water level, power is generated by using the water turbine generator.

One or more exemplary embodiments include an offshore floating power generator including a sea water reservoir floating on the sea surface and including a high water tank and a low water tank having a water level difference therebetween so as to allow effective power generation by using the water level difference between the high water tank and the low water tank.

Additional aspects will be set forth in part in the description which follows and, in part, will be apparent from the description, or may be learned by practice of the presented embodiments.

According to the present invention, an offshore floating power generator includes: a sea water reservoir configured to store sea water and float on the sea surface, wherein the sea water reservoir comprises a low water tank having a first water level and a high water tank having a second water level higher than the first water level, wherein the high water tank is disposed to surround the low water tank; an inlet pipe configured to guide the sea water flowing through an inlet portion to the low water tank or the high water tank; a connection pipe configured to connect the low water tank and the high water tank with each other; a water turbine generator provided on the connection pipe; and a water level adjustor configured to discharge the sea water stored in the low water tank to the high water tank, wherein, when sea water of the high water tank flows into the low water tank through the connection pipe due to a difference between the first water level and the second water level, power is generated by using the water turbine generator.

The high water tank may be arranged in an outer portion of the low water tank with respect to a center of the sea water reservoir.

The water turbine generator may function as a generator when the sea water flows into the low water tank, and function as a pump to discharge the sea water from the low water tank to the high water tank to thereby function as the water level adjustor.

The offshore floating power generator may further include a first valve and a second valve on the inlet pipe.

A screen may be provided between the first valve and the second valve to filter out foreign substances.

A third valve may be provided between the high water tank and the water turbine generator in the connection pipe, and a fourth valve may be provided between the water turbine generator and the low water tank in the connection pipe.

A wind power generating unit or a sunlight power generating unit may be provided on the sea water reservoir. A tidal power generating unit may be provided under the sea water reservoir.

An outer wall of the sea water reservoir may be formed of concrete.

The sea water reservoir may be connected to the ocean floor via a mooring rope.

The inlet portion may include slits that are spaced apart from one another along a circumferential direction thereof so that sea water flows through the slits.

An area over which sea water flows through the slits may be greater than a cross-section of the inlet pipe.

A fender beam mitigating an impact applied to the sea water reservoir due to collision with a ship or a drifting structure may be provided on a lateral side of the sea water reservoir.

Corners of a bottom surface of the sea water reservoir may be round.

A reinforcement wall may be provided inside the sea water reservoir to structurally reinforce the sea water reservoir.

The offshore floating power generator may further include a buoyancy stabilizing room, wherein an inner portion of the buoyancy stabilizing room is formed of a steel material, and an outer portion of the buoyancy stabilizing room is formed of concrete, and the buoyancy stabilizing room is filled with air.

A width of the slits may be reduced from the outside to the inside.

These and/or other aspects will become apparent and more readily appreciated from the following description of the embodiments, taken in conjunction with the accompanying drawings in which:
FIG. 1 is a schematic view of an offshore floating power generator according to an exemplary embodiment of the inventive concept;
FIG. 2 is a plan view of the offshore floating power generator of FIG. 1;
FIG. 3 is a cross-sectional view of an offshore floating power generator according to an exemplary embodiment of the inventive concept;
FIG. 4 is an excerpt view of an inlet portion included in the offshore floating power generator illustrated in FIG. 2;
FIG. 5 is a cross-sectional view of the inlet portion of FIG. 4, cut along a line A-A;
FIGS. 6 through 8 illustrate installation examples of a mooring rope;
FIGS. 9 and 10 are schematic views of the offshore floating power generator including a fender beam;
FIG. 11 illustrates flow separation occurring when the sea water reservoir is drawn;
FIG. 12 illustrates the offshore floating power generator when flow separation is reduced;
FIG. 13 is a schematic view of a reinforcement wall inside the sea water reservoir;
FIG. 14 is a schematic view of a buoyancy stabilizing room;
FIG. 15 shows a cross-section and a front view of an inlet portion according to another exemplary embodiment; and
FIG. 16 shows a cross-section and a front view of an inlet portion according to another exemplary embodiment.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the exemplary embodiments are merely described below, by referring to the figures, to explain aspects of the present description. Expressions such as "at least one of," when preceding a list of elements, modify the entire list of elements and do not modify the individual elements of the list.

The advantages and features of the inventive concept and methods of achieving the advantages and features will be described more fully with reference to the accompanying drawings, in which exemplary embodiments of the inventive concept are shown. The inventive concept may, however, be embodied in many different forms and should not be construed as being limited to the embodiments set forth herein; rather these embodiments are provided so that this disclosure will be thorough and complete, and will fully convey the concept of the inventive concept to one of ordinary skill in the art. Throughout the specification, like reference numerals refer to like elements.

Meanwhile, the terminology used herein is for the purpose of describing particular embodiments only and is not intended to be limiting of exemplary embodiments. As used herein, the singular forms "a," "an" and "the" are intended to include the plural forms as well, unless the context clearly indicates otherwise. It will be further understood that the terms "comprises" and/or "comprising" used herein specify the presence of stated components thereof, but do not preclude the presence or addition of one or more other components.

Unless otherwise defined, all terms (including technical and scientific terms) used herein have the same meaning as commonly understood by one of ordinary skill in the art to which exemplary embodiments belong.

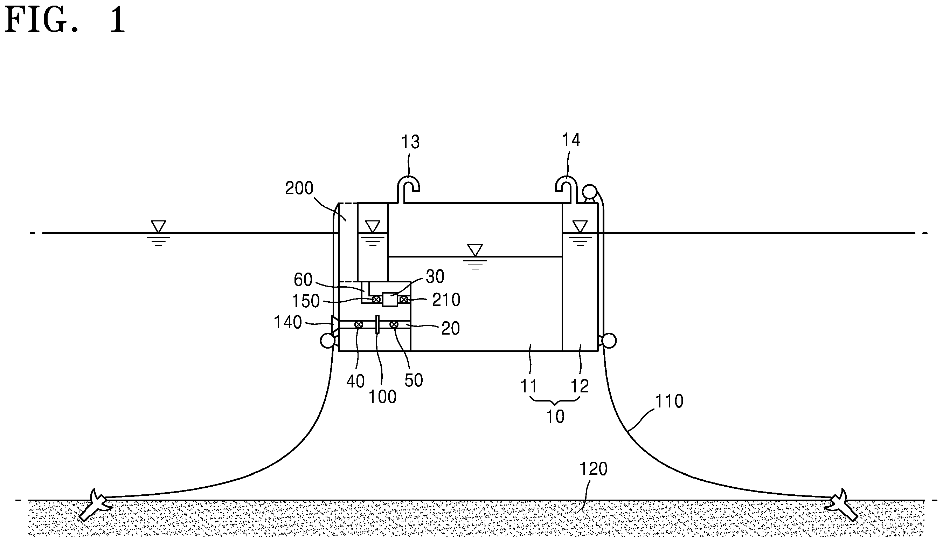

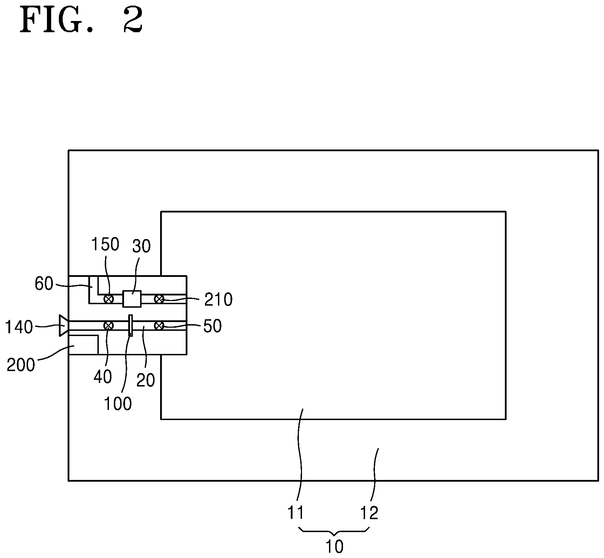

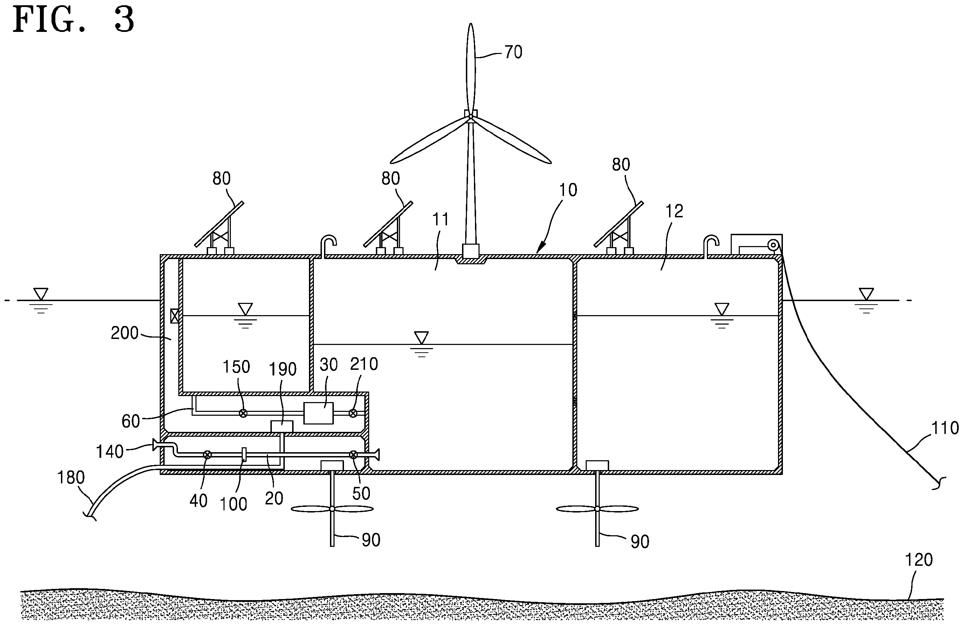

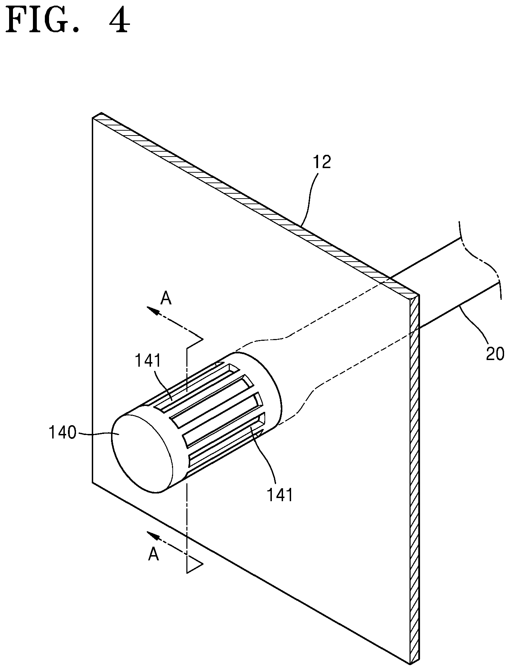

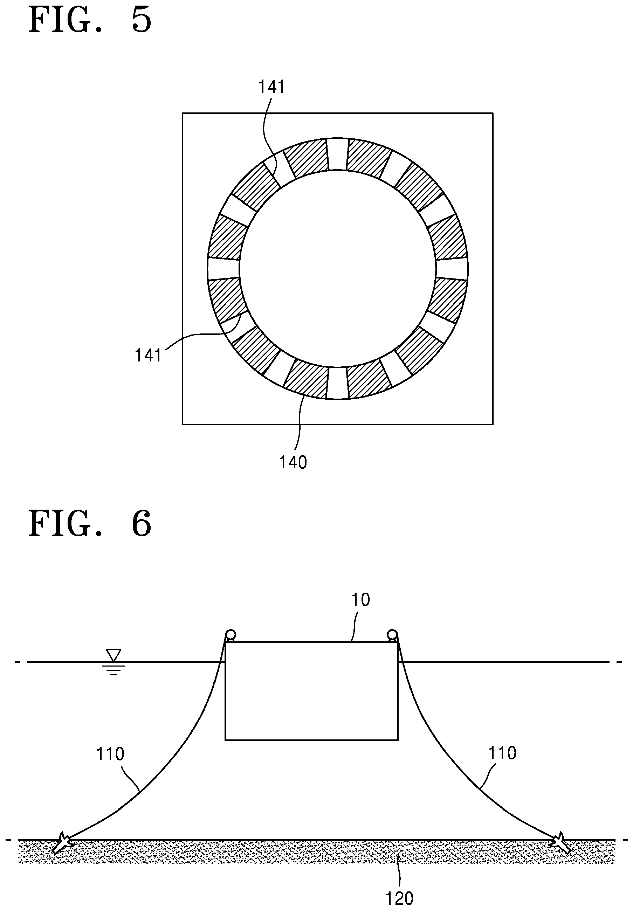

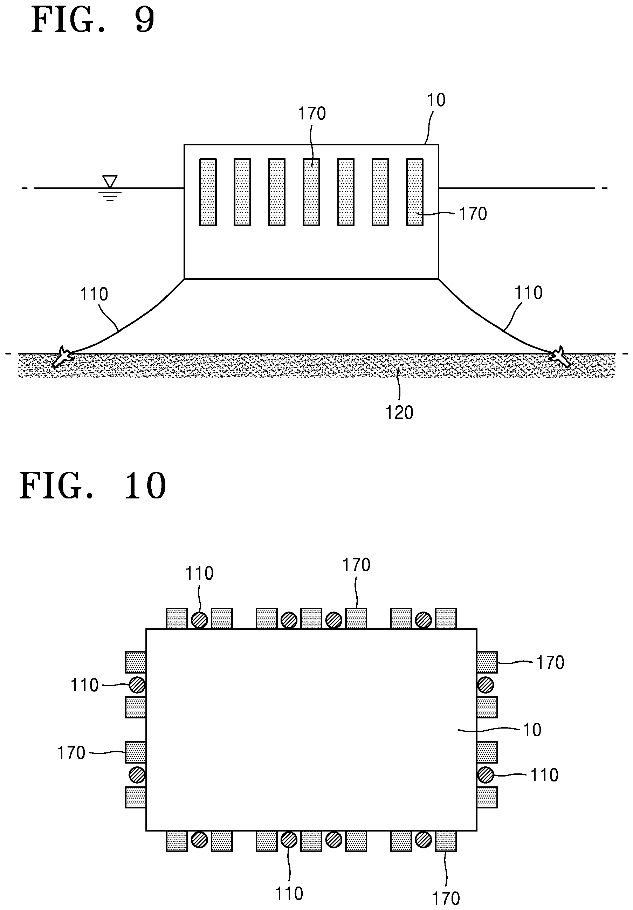

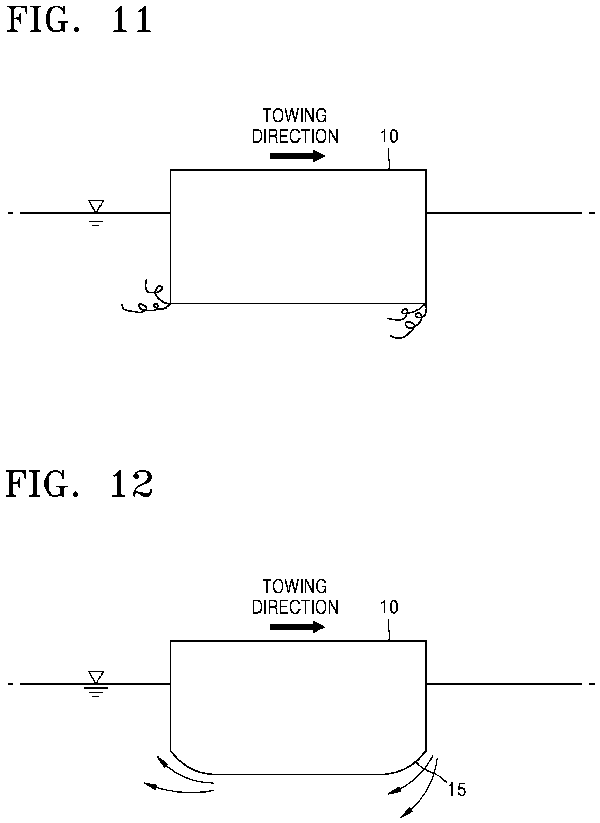

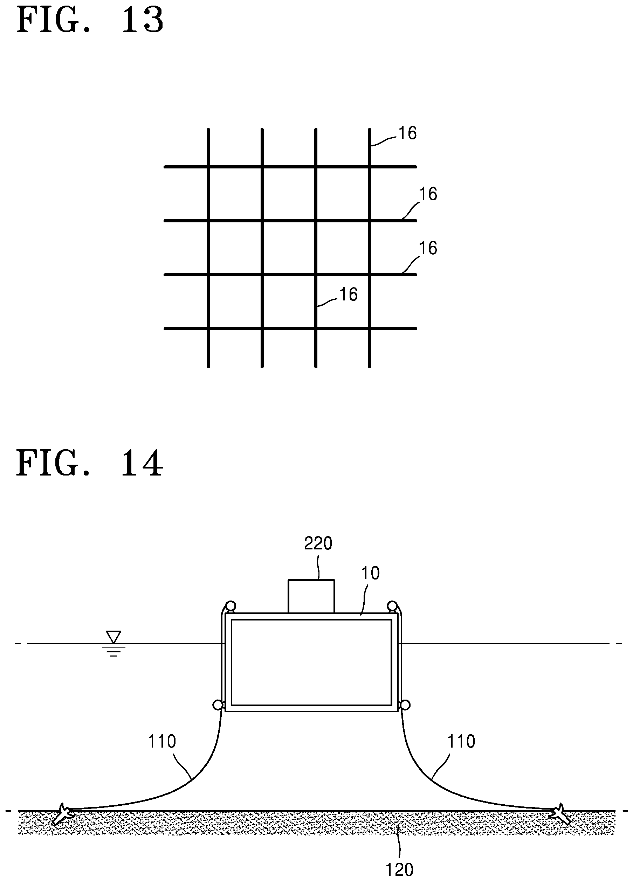

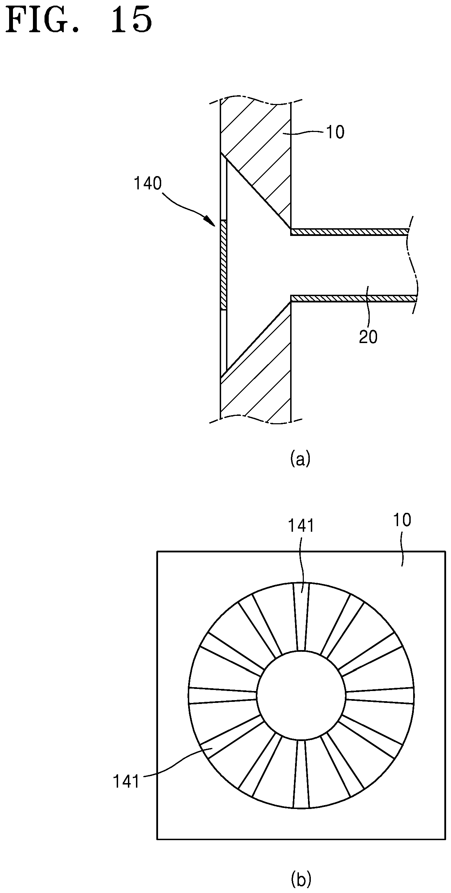

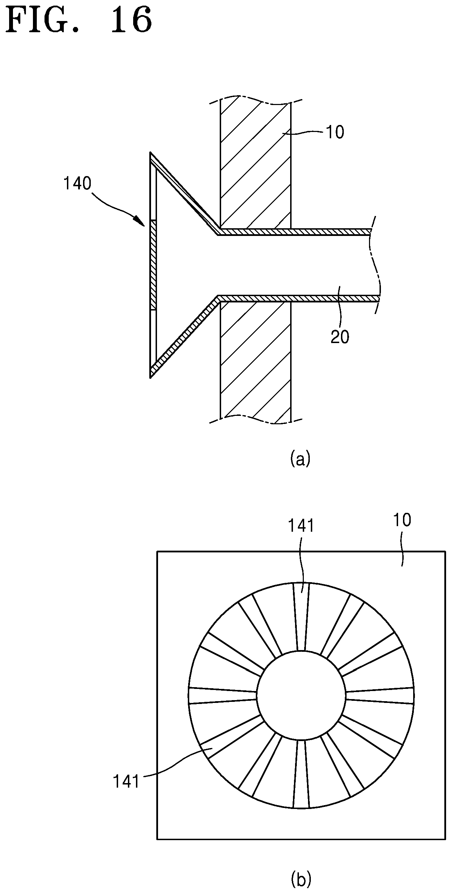

FIG. 1 is a schematic view of an offshore floating power generator according to an exemplary embodiment of the inventive concept. FIG. 2 is a plan view of the offshore floating power generator of FIG. 1. FIG. 3 is a cross-sectional view of an offshore floating power generator according to an exemplary embodiment of the inventive concept. FIG. 4 is an excerpt view of an inlet portion included in the offshore floating power generator illustrated in FIG. 2. FIG. 5 is a cross-sectional view of the inlet portion of FIG. 4, cut along a line A-A. FIGS. 6 through 8 illustrate installation examples of a mooring rope. FIGS. 9 and 10 are schematic views of the offshore floating power generator including a fender beam. FIG. 11 illustrates flow separation occurring when the sea water reservoir is drawn. FIG. 12 illustrates the offshore floating power generator when flow separation is reduced. FIG. 13 is a schematic view of a reinforcement wall inside the sea water reservoir. FIG. 14 is a schematic view of a buoyancy stabilizing room. FIG. 15 shows a cross-section and a front view of an inlet portion according to another exemplary embodiment. FIG. 16 shows a cross-section and a front view of an inlet portion according to another exemplary embodiment.

As illustrated in FIG. 1, the offshore floating power generator according to the exemplary embodiment of the inventive concept includes a sea water reservoir 10, an inlet pipe 20, a connection pipe 60, a water turbine generator 30, and a water level adjustor.

The sea water reservoir 10 stores sea water and floats on the sea surface. The sea water reservoir 10 includes a low water tank 11 and a high water tank 12. The low water tank 11 has a first water level, and the high water tank 12 has a second water level that is higher than the first water level. The sea water reservoir 10 is provided to produce power by using a water level difference between the low water tank 11 and the high water tank 12.

According to the present exemplary embodiment, the high water tank 12 is arranged in an outer portion of the low water tank 11 with respect to the low water tank 11. As illustrated in FIG. 2, the high water tank 12 may be arranged to surround the low water tank 11.

When providing both the low water tank 11 and the high water tank 12 in the sea water reservoir 10, in order to prevent inclination of the sea water reservoir 10 with respect to sea surface, one water tank may be placed in a center of the structure, and the other may be placed in an outer portion of the structure.

In particular, by increasing the moment of inertia by having the high water tank 12 in an outer portion of the low water tank 11, rolling of the sea water reservoir 10 (vertical motion of left and right portions of a structure when viewed from a front side of the structure) or pitching of the sea water reservoir 10 (vertical motion of front and back portions of a structure when viewed from a lateral side) may be reduced.

In detail, the moment of inertia of an object increases as the mass of the object is distributed away from a rotational axis of the object. The greater a moment of inertia, the more energy is needed to rotate an object. Thus, by increasing the moment of inertia by having the high water tank 12 in an outer portion of the low water tank 11, rolling or pitching generated by the sea water reservoir 10 due to waves or wind may be reduced.

According to the present exemplary embodiment, an outer wall of the sea water reservoir 10 is formed of concrete. More preferably, in order to prevent cracks in concrete due to tensile force, the outer wall of the sea water reservoir 10 may be formed of prestressed concrete (PC) that prevents cracks by maintaining a constant compressive force in a concrete portion of the outer wall by installing Tendon that is inserted into a concrete wall body.

In addition, manufacturing the sea water reservoir 10 by using a concrete structure is advantageous in terms of maintenance. Since sea water flows into and out of the sea water reservoir 10, the sea water reservoir 10 needs to be protected from corroding. If the sea water reservoir 10 is formed of a steel material, an outer wall and inner portions of the sea water reservoir 10 have to be regularly coated with protected coating to prevent corrosion, and if a structure size is large, it is impossible to pull up the structure to land. Thus, the sea water reservoir 10 formed of concrete according to the exemplary embodiment of the inventive concept does not require protection coating, thereby increasing a usage period thereof and easiness in terms of maintenance.

Moreover, by forming the sea water reservoir 10 by using a concrete structure, a long natural period of oscillation of the structure is set so that the sea water reservoir 10 stably floats on the sea surface. In detail, a buoyancy structure flowing on the sea surface not only has to endure wave power but also prevent resonance due to waves. If the buoyancy structure resonates, the amplitude of vertical movement of the buoyancy structure increases abruptly so that tensile force acting upon a mooring rope 110 also abruptly increases, resulting in damages to a connection portion between the mooring rope 110 and the buoyancy structure or detachment of the mooring rope 110 from the ocean floor 120. A resonance period of the buoyancy structure increases when a mass of the buoyancy structure increases, and thus, the sea water reservoir 10 formed of concrete may have a longer natural period of oscillations than that formed of a steel material.

In addition, as illustrated in FIG. 2, the sea water reservoir 10 includes a machine room accommodating the inlet pipe 20 and the water turbine generator 30 or the like, and the machine room may be entered through an entrance passage 200. For example, transportation equipment transporting people or cargo, such as an elevator, is installed in the entrance passage 200. In addition, as illustrated in FIG. 1, air vents 13 and 14, through which the atmospheric pressure may respectively act upon the high water tank 12 and the low water tank 11, are respectively mounted in the high water tank 12 and the low water tank 11.

The inlet pipe 20 guides sea water flowing through the inlet portion 140, into the low water tank 11 or the high water tank 12. According to the present exemplary embodiment, the inlet pipe 20 allows sea water to flow into the low water tank 11. However, the inlet pipe 20 may also be designed to allow sea water to flow into the high water tank 12, and sea water flown into the high water tank 12 may flow into the low water tank 11 through the connection pipe 60.

The inlet portion 140 is a portion through which sea water flows from the outside, and is disposed at a lateral lower end of the sea water reservoir 10 according to the present exemplary embodiment. According to the present exemplary embodiment, the inlet portion 140 protrudes from the sea water reservoir 10, as illustrated in FIGS. 3 and 4. In addition, slits 141 that are circumferentially spaced apart from one another are formed in the inlet portion 140.

As illustrated in FIG. 5, the slits 141 may have a width reducing from the outer side towards the inner side thereof. An area over which sea water flows through the slit 141 is larger than a cross-section of the inlet pipe 20. That is, a total area of outermost widths of the slit 141 is greater than the cross-section of the inlet pipe 20. Alternatively, the inlet portion 140 may also not protrude from the outer wall of the sea water reservoir 10. In detail, FIG. 15A is a cross-sectional view of the inlet portion 140 according to another exemplary embodiment, and FIG. 15B is a front view of the inlet portion 140 of FIG. 15A. As illustrated in FIG. 15A, the inlet portion 140 may not protrude from the outer wall of the sea water reservoir 10 but may be formed such that a plurality of slits 141 are formed as illustrated in FIG. 15B so that sea water may flow therethrough.

In addition, the inlet portion 140 may protrude from the outer wall of the sea water reservoir 10 in a different manner from that illustrated in FIG. 4. In detail, FIG. 16A is a cross-sectional view of the inlet portion 140 according to another exemplary embodiment, and FIG. 16B is a front view of the inlet portion 140 of FIG. 16A. As illustrated in FIG. 16A, the inlet portion 140 may protrude and extend in a radial direction from the outer wall of the sea water reservoir 10, and a plurality of slits 141 may be formed therein, as illustrated in FIG. 16B, so that sea water flows therethrough.

The connection pipe 60 connects the low water tank 11 and the high water tank 12 to each other. When sea water flows from the high water tank 12 to the low water tank 11 through the connection pipe 60, power is generated, and when sea water flows from the low water tank 11 to the high water tank 12, sea water of the low water tank 11 is discharged to the high water tank 12 so as to generate a water level difference. That is, sea water may flow through the connection pipe 60 in two directions.

According to the present exemplary embodiment, the water turbine generator 30, a third valve 150, and a fourth valve 210 are provided on the connection pipe 60. The third valve 150 is provided between the high water tank 12 and the water turbine generator 30. The fourth valve 210 is provided between the water turbine generator 30 and the low water tank 11.

The water turbine generator 30 is provided to generate water power based on a water level difference, and is provided on the connection pipe 60. The structure of the water turbine generator 30 is well known in the art, and thus a detailed description thereof is omitted.

The water level adjustor is provided in order to discharge sea water stored in the low water tank 11 to the high water tank 12. According to the present exemplary embodiment, a function of the water level adjustor is performed by using the water turbine generator 30. The water turbine generator 30 according to the present exemplary embodiment functions as a power generator when sea water flows from the high water tank 12 to the low water tank 11, and functions as a pump to discharge the sea water from the low water tank 11 to the high water tank 12. Thus, the water turbine generator 30 is a so-called reversible water turbine generator, performing the functions of both a power generator and a pump. Alternatively, the water level adjusting function may also be performed using an additional pump.

According to the structure described above, a water level difference between the first water level and the second water level is generated, and when sea water flows from the high water tank 12 to the low water tank 11 through the connection pipe 60, power is generated by using the water turbine generator 30.

A first valve 40 and a second valve 50 are provided on the inlet pipe 20. A screen 100 filtering out foreign substances is provided between the first valve 40 and the second valve 50. The first valve 40 and the second valve 50 are opened only when filling or supplementing sea water into the sea water reservoir 10.

As illustrated in FIG. 3, in order to generate a water level difference between the high water tank 12 and the low water tank 11 of the sea water reservoir 10, the first valve 40 and the second valve 50 are closed, and the sea water of the low water tank 11 is pumped to the high water tank 12 by using the water level adjustor. Here, the third valve 150 and the fourth valve 120 are opened. Power generated using at least one of wind power, sunlight, and tidal power generating units which will be described later or power that is drawn from land may be used as power to pump the sea water from the low water tank 11 to the high water tank 12 by using the water turbine generator 30.

According to the present exemplary embodiment, the water turbine generator 30 functions as a pump, and a total amount of sea water accommodated in the sea water reservoir 10 is not changed during pumping of sea water. Thus, the sea water reservoir 10 neither ascends nor descends from the sea surface, and thus the offshore floating power generator may also be used at a shallow depth.

After forming a standby state for power generation, where the high water tank 12 is at a higher water level than the low water tank 11 as above, the third valve 150 and the fourth valve 210 are closed. Next, at a required time, for example, when demand for power increases rapidly, the third valve 150 and the fourth valve 210 are opened so that sea water naturally flows from the high water tank 12 to the low water tank 11, and power is generated here by using the water turbine generator 30.

A power generating unit including the water turbine generator 30 is connected to a main transformer 190 provided on the sea water reservoir 10, and the main transformer 190 is connected to a substation on the shore through a submarine cable 180 so as to transmit generated power to the substation. The submarine cable 180 includes a communication line, a power transmission line, and a line for power that is used to drive internal elements in a power station and is drawn from land.

When examining the screen 100, the first valve 40 and the second valve 50 are closed, and when examining or repairing the water turbine generator 30, the third valve 150 and the fourth valve 210 are closed.

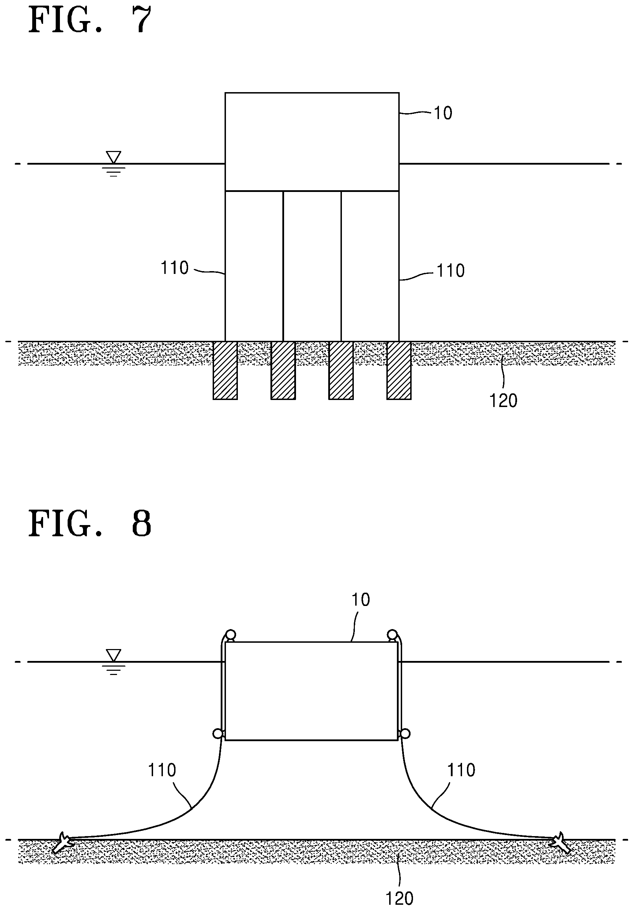

The sea water reservoir 10 is connected to the ocean floor 120 via the mooring rope 110. FIGS. 6 through 8 illustrate the mooring rope 110 connected to the sea water reservoir 10 in various manners. FIG. 6 illustrates an example where the mooring rope 110 connects an upper portion of the sea water reservoir 10 to the ocean floor 120. FIG. 7 illustrates an example where an end of the mooring rope 110 is firmly fixed to the ocean floor 120. FIG. 8 illustrates an example where the mooring rope 110 is disposed closely to an outer wall of the sea water reservoir 10 to extend downwards. The mooring rope 110 may be installed in various manners.

Referring to FIG. 3, the offshore floating power generator according to the present exemplary embodiment of the inventive concept includes a wind power generating unit 70, a sunlight power generating unit 80, and a tidal power generating unit 90.

The wind power generating unit 70 or the sunlight power generating unit 80 may be provided on the sea water reservoir 10, and the tidal power generating unit 90 may be provided under the sea water reservoir 10. The wind power generating unit 70, the sunlight power generating unit 80, and the tidal power generating unit 90 may be selectively installed or all of them may be installed. The wind power generating unit 70, the sunlight power generating unit 80, and the tidal power generating unit 90 are well-known in the art, and thus description thereof is omitted.

The wind power, sunlight, and tidal power generating units 70, 80, and 90 transmit generated power to land so that the power is available for use, and moreover, the power may also be used as power for driving internal elements of a power plant to pump the sea water of the sea water reservoir 10 from the low water tank 11 to the high water tank 12 so as to set a standby state for water-power generation.

In addition, according to the present exemplary embodiment, the offshore floating power generator includes a fender beam 170, a round portion 15, a buoyancy stabilization room 220, and a reinforcement wall 16.

The fender beams 170 are provided to mitigate an impact with a ship or other drifting structures. As illustrated in FIGS. 9 and 10, according to the present exemplary embodiment, the fender beams 170 are provided along a lateral circumference of the sea water reservoir 10. The mooring rope 110 extends downwards between the fender beams 170.

In addition, the sea water reservoir 10 according to the present exemplary embodiment includes the round portion 15 at each edge of a bottom surface thereof in order to get rid of flow separation. The offshore floating power generator according to the present inventive concept may be towed to a long distance sea or to a foreign country.

In this case, a drag that affects a towing force and a towing speed is to be reduced. The drag is increased because a negative pressure is formed due to flow separation formed at corners of a bottom surface of the sea water reservoir 10 as illustrated in FIG. 11. Thus, as illustrated in FIG. 12, as the corners of the bottom surface of the sea water reservoir 10 are round, flow separation may be gotten rid of, thereby minimizing drag during towing.

The reinforcement wall 16 is provided to increase structural stability of the sea water reservoir 10. The sea water reservoir 10 is used when the offshore floating power generator has a very great width, length, and height, and thus a plurality of reinforcement walls 16 are installed in the sea water reservoir 10 to provide structural stability thereof. The reinforcement walls 16 are arranged at uniform intervals in a lattice form when referring to FIG. 13, but this is exemplary, and an arrangement of the reinforcement walls 16 may be modified in various manners as long as structural reinforcement of the sea water reservoir 10 and circulation of sea water therein are easily provided.

The buoyancy stabilizing room 220 is provided to prevent sinking of the sea water reservoir 10. An inner portion of the buoyancy stabilizing room 220 is formed of a steel material, an outer portion of the buoyancy stabilizing room 220 is formed of concrete, and the buoyancy stabilizing room 220 is filled with air.

As illustrated in FIG. 14, according to the present exemplary embodiment, the buoyancy stabilizing room 220 is provided on the sea water reservoir 10. The buoyancy stabilizing room 220 may be manufacture by using a hybrid concrete construction method in which a steel sheet is placed such that water tightness is maintained, and then concrete is deposited on an outer circumference of the steel sheet. The buoyancy stabilizing room 220 is filled with air. The buoyancy stabilizing room 220 may be disposed on the low water tank 11 which is constantly maintained at a low water level. However, a location of the buoyancy stabilizing room 220 is not limited to the above. For example, the buoyancy stabilizing room 220 may be accommodated inside the sea water reservoir 10 and disposed above a water level of sea water filled in the sea water reservoir 10, or may be disposed on a sidewall of the sea water reservoir 10.

As described above, according to the offshore floating power generator of the present inventive concept, the sea water reservoir 10 is divided into the low water tank 11 and the high water tank 12, and power is generated by using a water level difference between the low water tank 11 and the high water tank 12. Thus, a time when to generate power, and an amount of power to be generated and a duration of power generation may be accurately predicted, thereby producing quality power.

In addition, as sea water circulates between the high water tank 12 and the low water tank 11, a total amount of sea water accommodated in the sea water reservoir 10 is uniform so that ascending and descending of the sea water reservoir 10 from the sea surface is minimized. Accordingly, the offshore floating power may be used at a shallow water depth.

As the sea water reservoir 10 floats on the sea surface, new space is created on the sea. Thus, the offshore floating power generator according to the inventive concept may be used as an alternative in the case where it is difficult to install a power generator on land. Also, the offshore floating power generator may be manufactured at a location where it is easy to manufacture the same, and then towed, and thus may be transported to a long distance, for example, to a foreign country.

In addition, the sea water reservoir 10 does not disturb circulation of tidal currents or sea water compared to a structure fixed on the ocean floor 120, and is thus environment-friendly, and does not cause sedimentation or erosion of the ocean floor and thus does not cause geographical changes. While a fixed structure consumes more material and equipment at a deeper depth of water, the sea water reservoir 10 is a floating type, and is thus installed regardless of a change in a water depth, and thus is cost-effective in terms of construction costs.

The sea water reservoir 10 may be manufactured on land or in a column water region and then transported in a floating state and then moored on the spot. Thus, the manufacture of the sea water reservoir 10 is less influenced by sea weather such as typhoon or hurricane than a fixed-type structure, and is thus constructed faster. In addition, the sea water reservoir 10 is towable over a far distance, and thus is highly mobile, and is also easily applicable to a sea area where a difference between the ebb and flow of the tides is great.

In addition, the offshore floating power generator according to the present inventive concept generates power by using renewable energies such as wind power, sunlight, and tidal force together, and thus, the renewable energies which are likely change greatly may be converted to power of a uniform output.

That is, power generated by driving the wind power, sunlight, and tidal power generating units 70, 80, and 90 may be transported to land for use or the power may be used as power for driving internal elements of a power plant so as to use the same as a power for pumping sea water of the low water tank 11 to the high water tank 12 to thereby build a power standby state, and when a demand for power abruptly increases or if power is wished, the power may be generated through water power generation.

In addition, as power is generated by using a water level difference between the high water tank 12 and the low water tank 11, quality power having uniform output may be intensively generated.

According to the offshore floating power generator of the inventive concept, the sea water reservoir is divided into a high water tank and a low water tank, and power is generated by using a water level difference between the high water tank and the low water tank, so that quality power is provided at a required time, and when, how much, and how long power is to be generated may be accurately predicted.

In addition, a wind power generating unit or a sunlight power generating unit is provided on the sea water reservoir, and a tidal power generating unit may be provided under the sea water reservoir, thereby transmitting power produced using the generating units to land or using the power as power for driving internal elements of a power plant to generate a water level difference between the high water tank and the low water tank so as to intensively produce quality power and supply the power to land.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope of the inventive concept as defined by the following claims.

## Claims

1. An offshore floating power generator comprising:
a sea water reservoir (10) configured to store sea water and float on the sea surface, wherein the sea water reservoir (10) comprises a low water tank (11) having a first water level and a high water tank (12) having a second water level higher than the first water level;
an inlet pipe configured to guide the sea water flowing through an inlet portion to the low water tank or the high water tank (12);
a connection pipe configured to connect the low water tank (11) and the high water tank (12) with each other;
a water turbine generator provided on the connection pipe; and
wherein, when sea water of the high water tank (12) flows into the low water tank (11) through the connection pipe due to a difference between the first water level and the second water level, power is generated by using the water turbine generator,
**characterised in that**:
the high water tank (12) is disposed to surround the low water tank (11); and
the offshore floating power generator further comprises a water level adjustor configured to discharge the sea water stored in the low water tank (11) to the high water tank (12).

2. The offshore floating power generator of claim 1, wherein the high water tank is arranged in an outer portion of the low water tank (11) with respect to a center of the sea water reservoir (10).

3. The offshore floating power generator of claim 1 or 2, wherein the water turbine generator (30) functions as a generator when the sea water flows into the low water tank (11), and functions as a pump to discharge the sea water from the low water tank (11) to the high water tank (12) to thereby function as the water level adjustor.

4. The offshore floating power generator of any one of the preceding claims, further comprising a first valve (40) and a second valve (50) on the inlet pipe (20).

5. The offshore floating power generator of claim 4, wherein a screen (100) is provided between the first valve (40) and the second valve (50) to filter out foreign substances.

6. The offshore floating power generator of any one of the preceding claims, wherein a third valve (150) is provided between the high water tank (12) and the water turbine generator (30) in the connection pipe (60), and a fourth valve (210) is provided between the water turbine generator (30) and the low water tank (11) in the connection pipe (60).

7. The offshore floating power generator of any one of the preceding claims, wherein a wind power generating unit (70) or a sunlight power generating unit (80) is provided on the sea water reservoir (10) or a tidal power generating unit (90) is provided under the sea water reservoir (10).

8. The offshore floating power generator of any one of the preceding claims, wherein an outer wall of the sea water reservoir (10) is formed of concrete and/or corners of a bottom surface of the sea water reservoir (10) are round.

9. The offshore floating power generator of any one of the preceding claims, wherein the sea water reservoir (10) is connected to the ocean floor (120) via a mooring rope (110).

10. The offshore floating power generator of any one of the preceding claims, wherein the inlet portion (140) comprises slits (141) that are spaced apart from one another along a circumferential direction thereof so that sea water flows through the slits (141).

11. The offshore floating power generator of claim 10, wherein an area over which sea water flows through the slits (141) is greater than a cross-section of the inlet pipe (20) and/or a width of the slits (141) is reduced from the outside to the inside.

12. The offshore floating power generator of any one of the preceding claims, wherein a fender beam (170) mitigating an impact applied to the sea water reservoir (10) due to collision with a ship or a drifting structure is provided on a lateral side of the sea water reservoir (10).

13. The offshore floating power generator of any one of the preceding claims, wherein a reinforcement wall (16) is provided inside the sea water reservoir (10) to structurally reinforce the sea water reservoir (10).

14. The offshore floating power generator of any one of the preceding claims, further comprising a buoyancy stabilizing room (220), wherein an inner portion of the buoyancy stabilizing room (220) is formed of a steel material, and an outer portion of the buoyancy stabilizing room (220) is formed of concrete, and the buoyancy stabilizing room (220) is filled with air.

## Patentansprüche

1. Offshore-schwimmender Stromgenerator, umfassend:
einen Meerwasserbehälter (10), der konfiguriert ist, um Meerwasser zu speichern und auf der Meeresoberfläche zu schwimmen, wobei der Meerwasserbehälter (10) einen Niedrigwassertank (11) mit einem ersten Wasserstand und einen Hochwassertank (12) mit einem zweiten Wasserstand, der höher als der erste Wasserstand ist, umfasst;
ein Einlassrohr, das konfiguriert ist, um das Meerwasser zu führen, das durch einen Einlassabschnitt zu dem Niedrigwassertank oder dem Hochwassertank (12) fließt;
ein Verbindungsrohr, das konfiguriert ist, um den Niedrigwassertank (11) und den Hochwassertank (12) miteinander zu verbinden;
einen Wasserturbinengenerator, der an dem Verbindungsrohr bereitgestellt ist; und
wobei, wenn Meerwasser des Hochwassertanks (12) durch das Verbindungsrohr aufgrund eines Unterschieds zwischen dem ersten Wasserstand und dem zweiten Wasserstand in den Niedrigwassertank (11) fließt, Strom unter Verwendung des Wasserturbinengenerators erzeugt wird,
**dadurch gekennzeichnet, dass**:
der Hochwassertank (12) angeordnet ist, um den Niedrigwassertank (11) zu umgeben; und
der Offshore-schwimmende Stromgenerator ferner eine Wasserstand-Einstellvorrichtung umfasst, die konfiguriert ist, um das Meerwasser, das in dem Niedrigwassertank (11) gespeichert ist, zu dem Hochwassertank (12) auszulassen.

2. Offshore-schwimmender Stromgenerator nach Anspruch 1, wobei der Hochwassertank in einem Außenabschnitt des Niedrigwassertanks (11) in Bezug auf eine Mitte des Meerwasserbehälters (10) angeordnet ist.

3. Offshore-schwimmender Stromgenerator nach Anspruch 1 oder 2, wobei der Wasserturbinengenerator (30) als ein Generator fungiert, wenn das Meerwasser in den Niedrigwassertank (11) fließt, und als eine Pumpe fungiert, um das Meerwasser von dem Niedrigwassertank (11) zu dem Hochwassertank (12) auszulassen, um dadurch als die Wasserstand-Einstellvorrichtung zu fungieren.

4. Offshore-schwimmender Stromgenerator nach einem der vorstehenden Ansprüche, ferner umfassend ein erstes Ventil (40) und in zweites Ventil (50) an dem Einlassrohr (20).

5. Offshore-schwimmender Stromgenerator nach Anspruch 4, wobei ein Gittersieb (100) zwischen dem ersten Ventil (40) und dem zweiten Ventil (50) bereitgestellt ist, um Fremdstoffe herauszufiltern.

6. Offshore-schwimmender Stromgenerator nach einem der vorstehenden Ansprüche, wobei ein drittes Ventil (150) zwischen dem Hochwassertank (12) und dem Wasserturbinengenerator (30) in dem Verbindungsrohr (60) bereitgestellt ist und ein viertes Ventil (210) zwischen dem Wasserturbinengenerator (30) und dem Niedrigwassertank (11) in dem Verbindungsrohr (60) bereitgestellt ist.

7. Offshore-schwimmender Stromgenerator nach einem der vorstehenden Ansprüche, wobei eine Windenergie-Erzeugungseinheit (70) oder eine Sonnenenergie-Erzeugungseinheit (80) an dem Meerwasserbehälter (10) bereitgestellt ist oder eine Gezeitenenergie-Erzeugungseinheit (90) unter dem Meerwasserbehälter (10) bereitgestellt ist.

8. Offshore-schwimmender Stromgenerator nach einem der vorstehenden Ansprüche, wobei eine Außenwand des Meerwasserbehälters (10) aus Beton gebildet ist und/oder Ecken einer Bodenfläche des Meerwasserbehälters (10) rund sind.

9. Offshore-schwimmender Stromgenerator nach einem der vorstehenden Ansprüche, wobei der Meerwasserbehälter (10) über ein Schiffstau (110) mit dem Meeresgrund (120) verbunden ist.

10. Offshore-schwimmender Stromgenerator nach einem der vorstehenden Ansprüche, wobei der Einlassabschnitt (140) Schlitze (141) umfasst, die entlang einer Umfangsrichtung davon voneinander beabstandet sind, sodass Meerwasser durch die Schlitze (141) fließt.

11. Offshore-schwimmender Stromgenerator nach Anspruch 10, wobei ein Bereich, über den Meerwasser durch die Schlitze (141) fließt, größer als ein Querschnitt des Einlassrohrs (20) ist und/oder eine Breite der Schlitze (141) von der Außenseite zu der Innenseite reduziert ist.

12. Offshore-schwimmender Stromgenerator nach einem der vorstehenden Ansprüche, wobei ein Fender-Balken (170), der einen Stoß abschwächt, der auf den Meerwasserbehälter (10) infolge eines Zusammenstoßes mit einem Schiff oder einer treibenden Struktur angewendet wird, an einer lateralen Seite des Meerwasserbehälters (10) bereitgestellt ist.

13. Offshore-schwimmender Stromgenerator nach einem der vorstehenden Ansprüche, wobei eine Verstärkungswand (16) im Inneren des Meerwasserbehälters (10) bereitgestellt ist, um den Meerwasserbehälter (10) strukturell zu verstärken.

14. Offshore-schwimmender Stromgenerator nach einem der vorstehenden Ansprüche, ferner umfassend einen Auftriebsstabilisierungsraum (220), wobei ein Innenabschnitt des Auftriebsstabilisierungsraums (220) aus einem Stahlmaterial gebildet ist und ein Außenabschnitt des Auftriebsstabilisierungsraums (220) aus Beton gebildet ist und der Auftriebsstabilisierungsraum (220) mit Luft gefüllt ist.

## Revendications

1. Générateur d'énergie flottant en mer comprenant :
un réservoir d'eau de mer (10) conçu pour stocker l'eau de mer et flotter à la surface de la mer, le réservoir d'eau de mer (10) comprenant un réservoir d'eau basse (11) présentant un premier niveau d'eau et un réservoir d'eau haute (12) présentant un deuxième niveau d'eau plus élevé que le premier niveau d'eau ;
un tuyau d'admission conçu pour guider l'eau de mer s'écoulant à travers une partie d'admission vers le réservoir d'eau basse ou le réservoir d'eau haute (12) ;
un tuyau de raccordement conçu pour relier le réservoir d'eau basse (11) et le réservoir d'eau haute (12) l'un à l'autre ;
un générateur de turbine à eau disposé sur le tuyau de raccordement ; et
dans lequel, lorsque l'eau de mer du réservoir d'eau haute (12) s'écoule dans le réservoir d'eau basse (11) à travers le tuyau de raccordement en raison d'une différence entre le premier niveau d'eau et le deuxième niveau d'eau, une énergie est générée à l'aide du générateur de turbine à eau,
**caractérisé en ce que** :
le réservoir d'eau haute (12) est disposé de manière à entourer le réservoir d'eau basse (11) ; et
le générateur d'énergie flottant en mer comprend en outre un ajusteur de niveau d'eau conçu pour évacuer l'eau de mer stockée dans le réservoir d'eau basse (11) vers le réservoir d'eau haute (12).

2. Générateur d'énergie flottant en mer selon la revendication 1, dans lequel le réservoir d'eau haute est agencé dans une partie externe du réservoir d'eau basse (11) par rapport à un centre du réservoir d'eau de mer (10).

3. Générateur d'énergie flottant en mer selon la revendication 1 ou 2, dans lequel le générateur de turbine à eau (30) fonctionne en tant que générateur lorsque l'eau de mer s'écoule dans le réservoir d'eau basse (11), et fonctionne en tant que pompe pour évacuer l'eau de mer du réservoir d'eau basse (11) vers le réservoir d'eau haute (12) pour ainsi fonctionner en tant qu'ajusteur de niveau d'eau.

4. Générateur d'énergie flottant en mer selon l'une quelconque des revendications précédentes, comprenant en outre une première soupape (40) et une deuxième soupape (50) sur le tuyau d'admission (20).

5. Générateur d'énergie flottant en mer selon la revendication 4, dans lequel un écran (100) est disposé entre la première soupape (40) et la deuxième soupape (50) pour éliminer par filtrage des substances étrangères.

6. Générateur d'énergie flottant en mer selon l'une quelconque des revendications précédentes, dans lequel une troisième soupape (150) est disposée entre le réservoir d'eau haute (12) et le générateur de turbine à eau (30) dans le tuyau de raccordement (60), et une quatrième soupape (210) est disposée entre le générateur de turbine à eau (30) et le réservoir d'eau basse (11) dans le tuyau de raccordement (60).

7. Générateur d'énergie flottant en mer selon l'une quelconque des revendications précédentes, dans lequel une unité de génération d'énergie éolienne (70) ou une unité de génération d'énergie solaire (80) est disposée sur le réservoir d'eau de mer (10) ou une unité de génération d'énergie marémotrice (90) est disposée sous le réservoir d'eau de mer (10).

8. Générateur d'énergie flottant en mer selon l'une quelconque des revendications précédentes, dans lequel une paroi externe du réservoir d'eau de mer (10) est formée de béton et/ou des coins d'une surface inférieure du réservoir d'eau de mer (10) sont ronds.

9. Générateur d'énergie flottant en mer selon l'une quelconque des revendications précédentes, dans lequel le réservoir d'eau de mer (10) est relié au fond marin (120) par le biais d'une corde d'amarrage (110).

10. Générateur d'énergie flottant en mer selon l'une quelconque des revendications précédentes, dans lequel la partie d'admission (140) comprend des fentes (141) qui sont espacées les unes des autres dans une direction circonférentielle de celle-ci de manière que l'eau de mer s'écoule à travers les fentes (141).

11. Générateur d'énergie flottant en mer selon la revendication 10, dans lequel une zone au-dessus de laquelle l'eau de mer s'écoule à travers les fentes (141) est plus grande qu'une section transversale du tuyau d'admission (20) et/ou une largeur des fentes (141) est réduite de l'extérieur vers l'intérieur.

12. Générateur d'énergie flottant en mer selon l'une quelconque des revendications précédentes, dans lequel une poutre de pare-chocs (170) atténuant un impact appliqué au réservoir d'eau de mer (10) en raison d'une collision avec un navire ou une structure dérivante est disposée sur un côté latéral du réservoir d'eau de mer (10).

13. Générateur d'énergie flottant en mer selon l'une quelconque des revendications précédentes, dans lequel une paroi de renfort (16) est disposée à l'intérieur du réservoir d'eau de mer (10) pour renforcer structurellement le réservoir d'eau de mer (10).

14. Générateur d'énergie flottant en mer selon l'une quelconque des revendications précédentes, comprenant en outre une chambre de stabilisation de flottaison (220), une partie interne de la chambre de stabilisation de flottaison (220) étant formée d'un matériau en acier, et une partie externe de la chambre de stabilisation de flottaison (220) étant formée de béton et la chambre de stabilisation de flottaison (220) étant remplie d'air.
